(19) Europäisches Patentamt
European Patent Office
Office européen des brevets

(11) **EP 1 750 436 A1**

(12) **EUROPEAN PATENT APPLICATION**

(43) Date of publication:
**07.02.2007 Bulletin 2007/06**

(51) Int Cl.:
**H04N 5/44** (2006.01)

(21) Application number: **06016207.0**

(22) Date of filing: **03.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **05.08.2005 JP 2005227987**

(71) Applicant: **SEIKO EPSON CORPORATION**
**Shinjuku-ku,**
**Tokyo 163-0811 (JP)**

(72) Inventors:
• **Irie, Michio**
**Suwa-shi**
**Nagano-ken 392-8502 (JP)**

• **Goto, Kenji**
**Suwa-shi**
**Nagano-ken 392-8502 (JP)**
• **Kitano, Masahiro**
**Suwa-shi**
**Nagano-ken 392-8502 (JP)**
• **Miyasaka, Mitsuru**
**Suwa-shi**
**Nagano-ken 392-8502 (JP)**

(74) Representative: **HOFFMANN EITLE**
**Patent- und Rechtsanwälte**
**Arabellastrasse 4**
**81925 München (DE)**

(54) **Receiving device**

(57) To lower the central frequency of a signal to be processed in the demodulating part without changing the intermediate frequency in a tuner, an image canceling mixer 3 mixes a carrier frequency signal of a broadcast wave received through an antenna 1 with a local oscillation signal thereby to convert a carrier frequency of the broadcast wave to an intermediate frequency. After an intermediate frequency signal produced in the image canceling mixer 3 is converted to a digital signal in the A/D converter 10, the intermediate frequency of the broadcast signal subjected to the conversion to a digital signal is converted to a lower frequency in the frequency conversion IQ separating part 11, and the OFDM demodulating part 15 performs an OFDM demodulation process.

FIG. 1

**Description**

[Technical Field]

The present invention relates to a receiving device, and particularly it relates to a receiving device suitable for application to a portable-type digital television broadcast receiver.
[Background Art]
Digitization of television broadcasts including Digital CS (Communication Satellite) broadcast, BS (Broadcast Satellite) broadcast, and Digital terrestrial broadcast have been proceeding, and the transition from analog television broadcast to digital television broadcast has been advancing. Now, as for a battery-driven portable digital broadcast receiver, the reduction in power consumption becomes an extremely important subject because battery duration as well as downsizing and weight reduction thereof are crucial elements of merchandise.
On the other hand, Patent Document 1 discloses a method which includes switching between filters according to the number of received segments and commonly using processes after A/D conversion, thereby to decrease circuit components and reduce the cost, and which includes changing the clock frequency of a demodulation process such as FFT according to a received segment (lowering the frequency when the number of received segments is small), thereby to reduce the power consumption.
[Patent Document 1] JP-A-2003-18496
[Disclosure of the Invention]
[Problems that the Invention is to Solve]
However, the method disclosed in Patent Document 1 cannot reduce the power consumption adequately because the central frequency of a signal processed in the demodulating part thereof is as high as 4.1MHz even in 1-segment receiving, and 3-segment receiving. Therefore, it is also conceivable to change IF output frequency according to the number of received segments (e.g. about 1MHz in the case of 3-segment receiving and about 0.5MHz in the case of 3-segment receiving). However, it is extremely difficult to change the local oscillation frequency in its tuner part. This is because the frequency bandwidth is wide, e.g. 300MHz in UHF band, in the case of television receiving, and besides in the case of an image canceling type mixer which is often used, it is required to exactly ensure the phase difference between a sin signal and a cos signal used as local oscillation signals and as such, its design margin is small originally. In addition, there is a problem such that the influence of 1/F noise is large in the case where the tuner part is manufactured in a CMOS-IC process because of a low IF frequency. Also, there is a problem such that the invasion of a local oscillation signal into the RF band occurs because RF frequency is close to the local oscillation frequency.
Therefore, it is an object of the invention to provide a receiving device which can lower the central frequency of a signal processed in its demodulating part without changing the local oscillation frequency in the tuner.
[Means for Solving the Problems]
To solve the above-described problems, a receiving device in association with an embodiment of the invention is characterized by having: an antenna for receiving a broadcast wave; a tuner for mixing a carrier frequency signal of the broadcast wave received through the antenna with a local oscillation signal thereby to convert a carrier frequency of the broadcast wave to an intermediate frequency; an analog/digital converter for converting a broadcast signal subjected to the conversion to the intermediate frequency to a digital signal; a frequency-converting part for converting the intermediate frequency of the broadcast signal subjected to the conversion to the digital signal to a lower frequency; and a demodulating part for performing a demodulation process of the broadcast signal subjected to the frequency conversion by the frequency-converting part.
Thus, the following are made possible: to convert the intermediate frequency of a broadcast signal, which has been subjected to the conversion to a digital signal, to a lower frequency; to lower the central frequency of a signal to be processed in the demodulating part; and to reduce power consumption by the receiving device. Further, even in the case of lowering the central frequency of a signal to be processed in the demodulating part, the intermediate frequency in the tuner can be kept at a relatively higher constant. Also, in the case where the tuner is manufactured in a CMOS-IC process, the following are made possible: to suppress the influence of 1/F noise; to keep off the carrier frequency from the local oscillation frequency; and to reduce the invasion of the local oscillation signal into RF band.
The receiving device in association with the embodiment of the invention is characterized in that the tuner includes: an oscillator for producing a SIN wave corresponding to a local oscillation frequency; a COS wave-producing unit for shifting a phase of the SIN wave by 90° thereby to produce a COS wave from the SIN wave; a first mixing unit for mixing a carrier frequency signal of a broadcast wave received through the antenna with the SIN wave thereby to convert a carrier frequency of the broadcast wave to an intermediate frequency; a second mixing unit for mixing the carrier frequency signal of the broadcast wave received through the antenna with the COS wave thereby to convert the carrier frequency of the broadcast wave to an intermediate frequency; a phase shifter for shifting a phase of an intermediate frequency signal produced in the second mixing unit by -90° with respect to a phase of an intermediate frequency signal produced in the first mixing unit; and an adder for adding the intermediate frequency signal produced in the first mixing unit and the intermediate frequency signal shifted in phase in the phase shifter to each other.

Thus, the following are made possible: to arrange an image canceling type mixer with the phase difference between a SIN signal and a COS signal ensured exactly; and to reduce the power consumption of the receiving device while canceling an image signal.

Also, the receiving device in association with the embodiment of the invention is characterized in that the intermediate frequency obtained in the tuner is made constant regardless of a received segment number, and the intermediate frequency of the broadcast signal subjected to the conversion to the digital signal is changed according to the received segment number.

Thus, the following are made possible: to lower the central frequency of a signal to be processed in the demodulating part according to a received segment number without changing the intermediate frequency in the tuner; and to reduce the power consumption of the receiving device while suppressing the deterioration of signal quality.

Further, the receiving device in association with the embodiment of the invention is characterized in that the intermediate frequency obtained in the tuner is $(64/63) \times 4$MHz, and a central frequency of the broadcast signal subjected to the conversion to the digital signal is $(64/63)$MHz in the case of 3-segment receiving, and is $(64/63) \times 0.5$MHz in the case of 1-segment receiving.

Thus, the following are made possible: to convert the central frequency of a signal to be processed in the demodulating part to a necessary lowest frequency according to a received segment number without changing the intermediate frequency in the tuner; and to reduce the power consumption of the receiving device while suppressing the deterioration of signal quality.

Still further, the receiving device in association with the embodiment of the invention is characterized in that the frequency-converting part includes a numerical controlled oscillator for changing a readout position on a table with a SIN signal waveform or COS signal waveform registered therein on a time axis thereby to change the frequency.

Thus, the following are made possible: to easily convert the intermediate frequency of a broadcast signal subjected to the conversion to a digital signal to a lower frequency; and to reduce the power consumption of the receiving device while suppressing expansion of the scale of circuit configuration.

[Best Mode of Carrying Out the Invention]

[Brief Description of the Drawings]

Fig. 1    it is a block diagram showing a schematic configuration of a receiving device in association with an embodiment of the invention.

Fig. 2    it is a view showing a frequency conversion process in association with an embodiment of the invention.

Fig. 3    is a view showing the detail of a SIN table in association with an embodiment of the invention.

A receiving device in association with an embodiment of the invention will be described below with reference to the drawings.

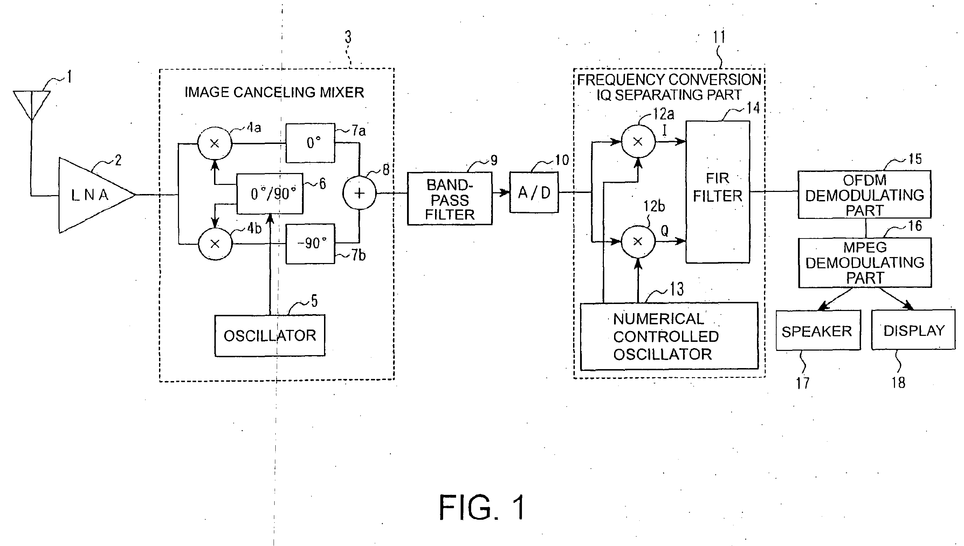

Fig. 1 is a block diagram showing a schematic configuration of the receiving device in association with an embodiment of the invention.

In the receiving device in Fig. 1 are provided: an antenna 1 for receiving a digital television broadcast airwave; a low noise amplifier 2 for amplifying a broadcast signal received through the antenna 1; an image canceling mixer 3 for mixing a carrier frequency signal of a broadcast wave amplified in the low noise amplifier 2 with a local oscillation signal thereby to convert the carrier frequency of the broadcast wave to an intermediate frequency; a band-pass filter 9 for removing an unnecessary band component from an intermediate frequency signal produced in the image canceling mixer 3; an A/D converter 10 for converting an intermediate frequency signal, which has passed through the band-pass filter 9, to a digital signal; a frequency conversion IQ separating part 11 for converting the intermediate frequency of the broadcast signal, which has been converted to a digital signal in the A/D converter 10, to a lower frequency and separating the resultant signal to an in-phase component I and a quadrature phase component Q in the quadrature modulation; an OFDM demodulating part 15 for performing an OFDM (Orthogonal Frequency Division Multiplexing) demodulation process; an MPEG demodulating part 16 for performing a demodulation process according to MPEG (Moving Picture Experts Group) system; a speaker 17 for outputting voice and sound of television broadcast; and a display 18 for displaying a picture of the television broadcast. As the digital television broadcast, for example, digital CS broadcast, digital BS broadcast and digital terrestrial broadcast may be cited.

Now, in the image canceling mixer 3 are provided: an oscillator 5 for producing a SIN wave corresponding to a local oscillation frequency; a SIN wave/COS wave-producing unit 6 for shifting the phase of a SIN wave produced in the oscillator 5 by 0° and shifting the phase of the SIN wave produced in the oscillator 5 by 90° thereby to produce SIN and COS waves; a mixing unit 4a for mixing a carrier frequency signal of a broadcast wave with the SIN wave thereby to convert the carrier frequency of the broadcast wave to an intermediate frequency; a mixing unit 4b for mixing the carrier frequency signal of the broadcast wave with the COS wave thereby to convert the carrier frequency of the broadcast wave to an intermediate frequency; a phase shifter 7a for shifting the phase of an intermediate frequency signal produced in the mixing unit 4a by 0°; a phase shifter 7b for shifting the phase of an intermediate frequency signal produced in the mixing unit 4b by -90°; and an adder 8 for adding outputs from the phase shifters 7a, 7b to each other.

Also, in the frequency conversion IQ separating part 11 are provided: a numerical controlled oscillator (NCO: Numerical Controlled Oscillator) 13 for changing a readout position on a table with a SIN signal waveform or COS signal waveform registered therein on a time axis thereby to change the frequency; a multiplier 12a for multiplying an intermediate frequency signal of a broadcast signal, which has been subjected to the conversion to a digital signal by the A/D converter 10, by a SIN signal waveform produced in the numerical controlled oscillator 13 thereby to extract an in-phase component I in the quadrature modulation; a multiplier 12b for multiplying an intermediate frequency signal of a broadcast signal, which has been subjected to the conversion to a digital signal by the A/D converter 10, by a COS signal waveform produced in the numerical controlled oscillator 13 thereby to extract a quadrature phase component Q in the quadrature modulation; and an FIR (Finite Impulse Response) filter 14 for removing an unnecessary band component from outputs from the multipliers 12a, 12b.

A digital television signal received through the antenna 1 is amplified by the low noise amplifier 2 and then sent to the image canceling mixer 3. Now, in the image canceling mixer 3, a SIN wave corresponding to the local oscillation frequency is produced by the oscillator and sent to the SIN wave/COS wave-producing unit 6. Then, the SIN wave/COS wave-producing unit 6 shifts the phase of a SIN wave produced in the oscillator 5 by 0°, shifts the phase of the SIN wave produced in the oscillator 5 by 90° thereby to produce a SIN wave and a COS wave, and supplies the resultant SIN wave and COS wave to the mixing units 4a, 4b respectively. Then, the mixing unit 4a mixes a carrier frequency signal of a television signal subjected to the amplification by the low noise amplifier 2 with the SIN wave thereby to convert the carrier frequency of the television signal to an intermediate frequency, and outputs the resultant signal to the phase shifter 7a. In addition, the mixing unit 4b mixes the carrier frequency signal of the television signal subjected to the amplification by the low noise amplifier 2 with the COS wave thereby to convert the carrier frequency of the television signal to an intermediate frequency, and outputs the resultant signal to the phase shifter 7b. Then, the phase shifter 7a shifts the phase of the intermediate frequency signal produced in the mixing unit 4a by 0° and outputs the resultant signal to the adder 8, whereas the phase shifter 7b shifts the phase of the intermediate frequency signal produced in the mixing unit 4b by -90° and outputs the resultant signal to the adder 8. Then, the adder 8 adds the outputs from the phase shifters 7a, 7b to each other and outputs the resultant signal to the band-pass filter 9.

Then, an intermediate frequency signal output from the adder 8 is subjected to the removal of an unnecessary band component thereof in the band-pass filter 9, sent to the A/D converter 10, and converted to a digital signal. Further, the intermediate frequency signal after the conversion to a digital signal is sent to the frequency conversion IQ separating part 11, where the intermediate frequency signal is converted to a lower frequency. That is, the intermediate frequency signal subjected to the conversion to a digital signal is sent to the multipliers 12a, 12b. Then, the multiplier 12a multiplies together the intermediate frequency signal subjected to the conversion to a digital signal and a SIN signal waveform output from the numerical controlled oscillator 13, whereby an in-phase component I in the quadrature modulation is extracted. Also, the multiplier 12b multiplies together the intermediate frequency signal subjected to the conversion to a digital signal and a COS signal waveform output from the numerical controlled oscillator 13, and then a quadrature phase component Q in the quadrature modulation is extracted. Then, the in-phase component I and the quadrature phase component Q, which are output from the multipliers 12a, 12b respectively, are sent to the FIR filter 14, where an unnecessary band component is removed from the in-phase component I and the quadrature phase component Q respectively output from the multipliers 12a, 12b.

Herein, the conversion of the intermediate frequency of an intermediate frequency signal to a lower frequency after digitization of the intermediate frequency signal by the A/D converter 10 enables avoidance of the influence of 1/F noise, change of the frequency through a logic process, and facilitation of the frequency conversion process. Incidentally, the following are preferable: the intermediate frequency of an intermediate frequency signal produced in the image canceling mixer 3 is made constant regardless of the number of received segments; and the intermediate frequency of a broadcast signal subjected to the conversion to a digital signal is changed according to the number of received segments. For example, it is preferable that the intermediate frequency of an intermediate frequency signal produced by the image canceling mixer 3 is (64/63)x4MHz, and it is preferable that the central frequency of a broadcast signal subjected to the conversion to a digital signal is (64/63)MHz in the case of 3-segment receiving and (64/63)×0.5MHz in the case of 1-segment receiving.

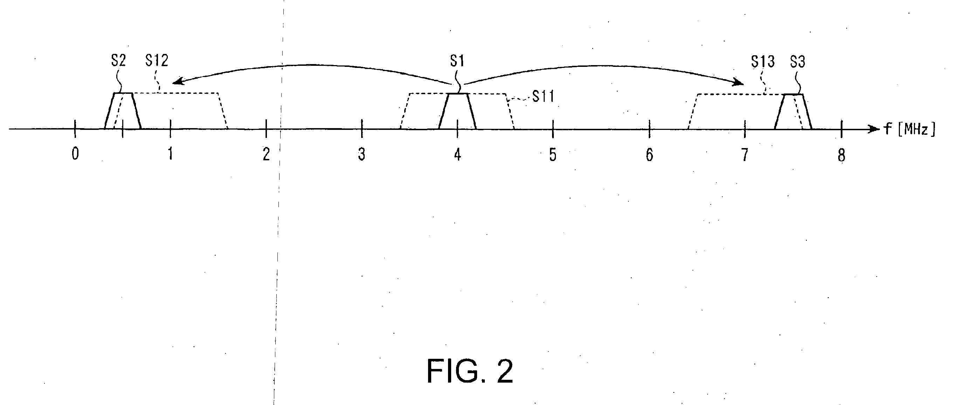

Fig. 2 is a view showing a frequency conversion process in association with an embodiment of the invention. In Fig. 2, in the case of 1-segment receiving, an intermediate frequency signal S1 having an intermediate frequency of (64/63)×4MHz is produced in the image canceling mixer 3. The intermediate frequency signal S1 of (64/63)×4MHz is converted to a digital signal by the A/D converter 10, and then converted to a signal S2 having a central frequency of (64/63)×0.5MHz in the frequency conversion IQ separating part 11. Here, when the intermediate frequency signal S1 of (64/63)×4MHz is converted to the signal S2 having a central frequency of (64/63)×0.5MHz, an image signal S3 is produced at a position symmetric with respect to (64/63)×0.5MHz using (64/63)×4MHz as the center. By removing the image signal S3 by the FIR filter 14, it becomes possible to extract only the signal S2 having a central frequency of (64/63)×0.5MHz.

On the other hand, in the case of 3-segment receiving, an intermediate frequency signal S11 having an intermediate frequency of (64/63)×4MHz is produced in the image canceling mixer 3. The intermediate frequency signal S11 of (64/63)×4MHz is converted to a digital signal by the A/D converter 10, and then converted to a signal S12 having a central frequency of (64/63)MHz in the frequency conversion IQ separating part 11. Here, when the intermediate frequency signal S11 of (64/63)×4MHz is converted to the signal S12 having a central frequency of (64/63)MHz, the image signal S13 is produced at a position symmetric with respect to (64/63) MHz using (64/63)×4MHz as the center, and the image signal S13 is removed by the FIR filter 14, whereby only the signal S12 of a central frequency of (64/63) MHz can be extracted.

In the case where an intermediate frequency of an intermediate frequency signal produced in the image canceling mixer 3 is converted to a digital signal by the A/D converter 10 and the intermediate frequency thereof is converted to a lower frequency, a SIN table with a SIN signal waveform registered therein is set, and the numerical controlled oscillator 13 changes a readout position of the SIN signal waveform on the time axis, whereby the frequency of the digital signal can be changed easily.

Here, when the clock frequency of the numerical controlled oscillator 13 is represented by f_clk, the output frequency of the numerical controlled oscillator 13 can be expressed by the following expression:

$$Output\ Frequency\ =\ (Step\ Number \times f\_clk)/SIN\ Table\ Length.$$

For example, in order to convert, in frequency, an intermediate frequency signal of (64/63)×4MHz to (64/63)MHz and (64/63)×0.5MHz, SIN waves of (64/63)×3MHz and (64/63)×3.5MHz may be produced respectively. Hence, it is adequate that a signal can be produced at step intervals of (64/63)×0.5MHz. Therefore, the following are derived:

$$Output\ Frequency\ =\ Step\ Number\ \times (64/63) \times 0.5MHz,$$

and

$$f\_clk/SIN\ Table\ Length\ =\ (64/63) \times 0.5MHz.$$

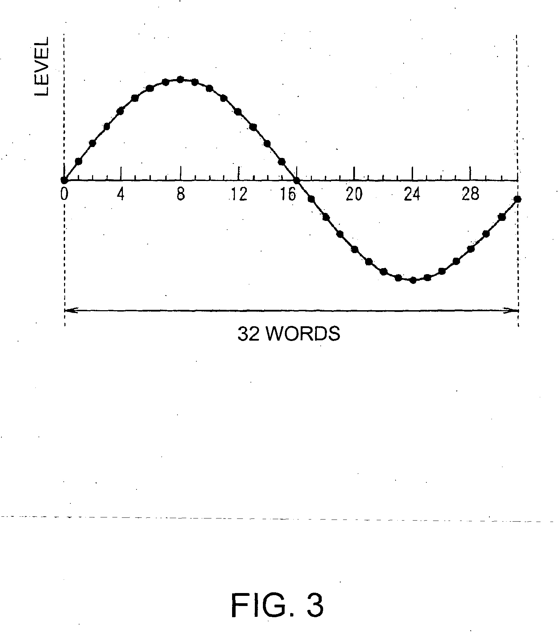

In the case where the sampling frequency fs_clk of the A/D converter 10 which performs A/D conversion of the intermediate frequency signal of (64/63)×4MHz is (64/63)×16MHz, the expression is as follows: *SIN Table Length* = ((64/63)×16MHz)/((64/63)×0.5MHz) = 32. Then, it is adequate that a SIN table for 32 words is prepared as shown in Fig. 3. When the SIN table is read at step intervals of 7, a signal of (64/63)×3.5MHz can be generated. Also, when the SIN table is read at step intervals of 6, a signal of (64/63)×3MHz can be generated. Further, when the readout is performed while shifting the phase of a SIN signal waveform registered in the SIN table by 90°, a COS signal waveform can be read out.

Also, in consideration of the periodicity of a SIN waveform, it is possible to realize the SIN table as a SIN table of 16 words for a first half period of the SIN waveform or as a SIN table of 8 words for a quarter period alike. For example, in the case where a SIN table of 16 words for the first half period of a SIN waveform is used, the latter half portion thereof may be read out by inverting the sign of the first half portion (i.e. multiplying it by -1) because of the periodicity of a SIN waveform.

Again, with reference to Fig. 1, when an intermediate frequency signal of a broadcast signal subjected to the conversion to a digital signal is converted to a lower frequency in the frequency conversion IQ separating part 11, the resultant signal is sent to the OFDM demodulating part 15 and subjected to an OFDM demodulation process in the OFDM demodulating part 15. Herein, in the OFDM demodulating part 15 are provided a TMCC decoding part and a TS demodulating-and-decoding part; a broadcast signal output from the frequency conversion IQ separating part 11 is sent to the TMCC (Transmission Multiplexing Configuration Control) decoding part and the TS (Transport Stream) demodulating-and-decoding part. Then, the TMCC decoding part decodes TMCC information from a broadcast signal output from the frequency conversion IQ separating part 11 and sends the TMCC information to the TS demodulating-and-decoding part. Then, when the TS demodulating-and-decoding part accepts the TMCC information from the TMCC decoding part, it decodes a TS signal from the broadcast signal output from the frequency conversion IQ separating part 11 while switching the decoding mode based on the modulation system specified by the TMCC information.

Then, the TS signal demodulated by the OFDM demodulating part 15 is sent to the MPEG demodulating part 16 and demodulated into a video signal and a voice and sound signal in the MPEG demodulating part 16. The voice and sound signal demodulated by the MPEG demodulating part 16 is sent to the speaker 17 and the speaker 17 outputs voice and sound of the television broadcast. The video signal demodulated by the MPEG demodulating part 16 is sent to the display 18, and a picture of the television broadcast is displayed by the display 18.

Thus, the following are made possible: to convert the intermediate frequency of a broadcast signal, which has been subjected to the conversion to a digital signal, to a lower frequency; to lower the central frequency of a signal to be processed in the OFDM demodulating part 15; and to reduce power consumption by the receiving device. Further, even in the case of lowering the central frequency of a signal to be processed in the OFDM demodulating part 15, the intermediate frequency in the image canceling mixer 3 can be kept at a relatively higher constant. Also, in the case where the image canceling mixer 3 is manufactured in a CMOS-IC process, the following are made possible: to suppress the influence of 1/F noise; to keep off the carrier frequency from the local oscillation frequency; and to reduce the invasion of the local oscillation signal into RF band.

[Description of the Reference Numerals]

1    antenna,
2    low noise amplifier,
3    image canceling mixer,

4a, 4b    mixing unit,

5    oscillator,
6    SIN wave/COS wave-producing unit,

7a, 7b    phase shifter,

8    adder,
9    band-pass filter,
10    A/D converter,
11    frequency conversion IQ separating part,
12a, 12b    multiplier,
13    numerical controlled oscillator,
14    FIR filter,
15    OFDM demodulating part,
16    MPEG demodulating part,
17    speaker,
18    display

## Claims

1.  A receiving device, comprising:

an antenna for receiving a broadcast wave;
a tuner for mixing a carrier frequency signal of the broadcast wave received through the antenna with a local oscillation signal thereby to convert a carrier frequency of the broadcast wave to an intermediate frequency;
an analog/digital converter for converting a broadcast signal subjected to the conversion to the intermediate frequency to a digital signal;
a frequency-converting part for converting the intermediate frequency of the broadcast signal subjected to the conversion to the digital signal to a lower frequency; and
a demodulating part for performing a demodulation process of the broadcast signal subjected to the frequency conversion by the frequency-converting part.

2. The receiving device of Claim 1, wherein the tuner includes:

> an oscillator for producing a SIN wave corresponding to a local oscillation frequency;
> a COS wave-producing unit for shifting a phase of the SIN wave by 90° thereby to produce a COS wave from the SIN wave;
> a first mixing unit for mixing a carrier frequency signal of a broadcast wave received through the antenna with the SIN wave thereby to convert a carrier frequency of the broadcast wave to an intermediate frequency;
> a second mixing unit for mixing the carrier frequency signal of the broadcast wave received through the antenna with the COS wave thereby to convert the carrier frequency of the broadcast wave to an intermediate frequency;
> a phase shifter for shifting a phase of an intermediate frequency signal produced in the second mixing unit by - 90° with respect to a phase of an intermediate frequency signal produced in the first mixing unit; and
> an adder for adding the intermediate frequency signal produced in the first mixing unit and the intermediate frequency signal shifted in phase in the phase shifter to each other.

3. The receiving device of Claim 1 or 2, wherein the intermediate frequency obtained in the tuner is made constant regardless of a received segment number, and the intermediate frequency of the broadcast signal subjected to the conversion to the digital signal is changed according to the received segment number.

4. The receiving device of Claim 3, wherein the intermediate frequency obtained in the tuner is $(64/63) \times 4$MHz, and a central frequency of the broadcast signal subjected to the conversion to the digital signal is $(64/63)$MHz in the case of 3-segment receiving, and is $(64/63) \times 0.5$MHz in the case of 1-segment receiving.

5. The receiving device of any one of Claims 1 to 4, wherein the frequency-converting part includes a numerical controlled oscillator for changing a readout position on a table with a SIN signal waveform or COS signal waveform registered therein on a time axis thereby to change the frequency.

FIG. 1

IMAGE CANCELING MIXER

LNA

OSCILLATOR

0°/90°

0°

−90°

BAND-PASS FILTER

A/D

FREQUENCY CONVERSION IQ SEPARATING PART

FIR FILTER

NUMERICAL CONTROLLED OSCILLATOR

OFDM DEMODULATING PART

MPEG DEMODULATING PART

SPEAKER

DISPLAY

I

Q

FIG. 2

FIG. 3

**European Patent Office**

**EUROPEAN SEARCH REPORT**

Application Number

EP 06 01 6207

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/20792 A1 (SARNOFF CORP [US]; MALKEMES ROBERT [US]) 22 March 2001 (2001-03-22) * the whole document * | 1,2,5 | INV. H04N5/44 |
| X | EP 1 137 209 A2 (TEXAS INSTRUMENTS INC [US]) 26 September 2001 (2001-09-26) * abstract * * paragraphs [0098] - [0100] * * figure 32 * | 1,3,4 | |
| X | US 6 134 429 A (FEYFANT PATRICK [FR] ET AL) 17 October 2000 (2000-10-17) * the whole document * | 1 | |
| X | US 2003/123383 A1 (KOROBKOV DMITRI [DE] ET AL) 3 July 2003 (2003-07-03) * abstract * * paragraph [0073] * * figure 7 * | 1 | |
| A | EP 1 300 956 A (MATSUSHITA ELECTRIC IND CO LTD [JP]) 9 April 2003 (2003-04-09) * abstract * * figures 2,3 * | 1-5 | TECHNICAL FIELDS SEARCHED (IPC) H04N H03D H04B |

The present search report has been drawn up for all claims

| Place of search | Date of completion of the search | Examiner |
|---|---|---|
| Munich | 7 November 2006 | Horstmannshoff, Jens |

EPO FORM 1503 03.82 (P04C01)

EP 1 750 436 A1

## ANNEX TO THE EUROPEAN SEARCH REPORT
## ON EUROPEAN PATENT APPLICATION NO.

EP 06 01 6207

This annex lists the patent family members relating to the patent documents cited in  the above-mentioned European search report.
The members are as contained in the European Patent Office EDP file on
The European Patent Office is in no way liable for these particulars which are merely given for the purpose of information.

07-11-2006

| Patent document cited in search report | | Publication date | Patent family member(s) | | Publication date |
|---|---|---|---|---|---|
| WO 0120792 | A1 | 22-03-2001 | TW | 480833 B | 21-03-2002 |
| EP 1137209 | A2 | 26-09-2001 | JP | 2001298375 A | 26-10-2001 |
| US 6134429 | A | 17-10-2000 | NONE | | |
| US 2003123383 | A1 | 03-07-2003 | NONE | | |
| EP 1300956 | A | 09-04-2003 | CN | 1409481 A | 09-04-2003 |
| | | | US | 2003071925 A1 | 17-04-2003 |

EPO FORM P0459

For more details about this annex : see Official Journal of the European Patent Office, No. 12/82

12

**EP 1 750 436 A1**

## REFERENCES CITED IN THE DESCRIPTION

### Patent documents cited in the description

• JP 2003018496 A